(19)

Europäisches Patentamt
European Patent Office
Office européen des brevets

(11) EP 3 667 587 A1

(12) EUROPEAN PATENT APPLICATION

(43) Date of publication:
17.06.2020  Bulletin 2020/25

(51) Int Cl.:
G06Q 20/12 (2012.01)      G06Q 20/02 (2012.01)

(21) Application number: 19211479.1

(22) Date of filing: 26.11.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 10.12.2018   JP 2018230624

(71) Applicant: FUJITSU LIMITED
Kanagawa 211-8588 (JP)

(72) Inventor: Nishimaki, Satoru
Kanagawa 211-8588 (JP)

(74) Representative: Hoffmann Eitle
Patent- und Rechtsanwälte PartmbB
Arabellastraße 30
81925 München (DE)

(54) **STORAGE MEDIUM, DATA TRANSACTION PROCESSING APPARATUS, AND DATA TRANSACTION PROCESSING METHOD**

(57)     A program that causes a processor included in computer to execute a process, the process includes requesting a terminal of a purchaser who has purchased data to pay for the data and a deposit, transmitting the data to the terminal in response to the payment for the data and the deposit, and refunding an amount of money within the deposit to the terminal of the purchaser in response to a report on illegitimacy of a distributor of the data from the terminal of the purchaser.

FIG. 1

**Description**

FIELD

The embodiments discussed herein are related to a storage medium, a data transaction processing apparatus, and a data transaction processing method.

BACKGROUND

There are techniques that transact data such as contents over the Internet to utilize the data on new businesses. For example, a data distributor sells data by accessing a server from a terminal to upload the data and setting the price for the data. A purchaser purchases desired data by accessing the server from a terminal, paying for the data, and downloading the data.

In this way, the trade of the data is established over the Internet. For example, a technique is disclosed in which the price of a job requested by a user is paid on the Internet.

For example, related art is disclosed in Japanese Laid-open Patent Publication No. 2004-362355.

SUMMARY

[TECHNICAL PROBLEM]

The transaction of data in the related art involves a risk that a malicious user copies, without authorization, data the user purchased from a legitimate distributor, uploads the copied illegitimate data (hereinafter, referred to as "copied data") to a server, and sells the duplicated data at a price less expensive than the purchase price to profit illegally. The legitimate distributor suffers damage because the sales of the data decrease as the sales of the duplicated data increase.

If an administrator of data transaction checks the legitimacy of the distributor of data before selling the data, it is possible to suppress the sales of the duplicated data by an illegitimate distributor. However, the larger the number of pieces of data to be checked, the longer the time taken for the check. Hence, the time to start the sale is delayed, making it difficult to smoothly transact data. If a purchaser checks the legitimacy of a distributor and reports the result of check to an administrator, it is possible for the administrator to omit the check.

However, purchasers tend to purchase copied data, putting more importance on the cheapness of the price of the copied data than on the legitimacy of the distributor, if there is no large difference in quality between the copied data and the original data. For this reason, even when a distributor is illegitimate, it depends on the conscience of a purchaser whether to report that.

In view of the above, it is desirable to provide a data transaction processing program, a data transaction processing apparatus, and a data transaction processing method that encourage purchasers to report an illegitimate distributor.

[SOLUTION TO PROBLEM]

According to an aspect of the embodiments, a non-transitory computer-readable storage medium storing a program that causes a processor included in computer to execute a process, the process includes requesting a terminal of a purchaser who has purchased data to pay for the data and a deposit, transmitting the data to the terminal in response to the payment for the data and the deposit, and refunding an amount of money within the deposit to the terminal of the purchaser in response to a report on illegitimacy of a distributor of the data from the terminal of the purchaser.

[ADVANTAGEOUS EFFECTS OF INVENTION]

As an aspect of the embodiment, it is possible to encourage purchasers to report an illegitimate distributor.

BRIEF DESCRIPTION OF DRAWINGS

FIG. 1 is a configuration diagram illustrating an example of a network system;
FIG. 2 is a configuration diagram illustrating an example of the marketplace server;
FIG. 3 is a diagram illustrating examples of a data management table and a purchase history management table;
FIG. 4 is a flowchart illustrating an example of processes of the marketplace server;

FIG. 5 is a sequence diagram illustrating an example of an exhibiting process;

FIG. 6 is a sequence diagram illustrating an example of a deposit setting process;

FIG. 7 is a sequence diagram illustrating an example of a sale process;

FIG. 8 is a sequence diagram illustrating an example of a reviewing process;

FIG. 9 is a sequence diagram illustrating an example of a settling process;

FIG. 10 is a sequence diagram illustrating an example of an exhibiting process in a case where sellers pay deposited money;

FIG. 11 is a sequence diagram illustrating an example of a sale process in the case where the sellers pay deposited money;

FIG. 12 is a sequence diagram illustrating an example of a settling process in the case where the sellers pay deposited money;

FIG. 13 is a flowchart illustrating an example of a deposit change process;

FIG. 14 is a sequence diagram illustrating an example of a reviewing process in a case where a purchaser has made a false violation report;

FIG. 15 is a sequence diagram illustrating an example of a settling process in a case where the purchaser has made a false violation report;

FIG. 16 is a sequence diagram illustrating an example of a reviewing process in a case where an upper limit is set to a report possible number;

FIG. 17 is a diagram illustrating an example of an account management table; and

FIG. 18 is a diagram illustrating an example of a purchase history management table after the reviewing process.

## DESCRIPTION OF EMBODIMENTS

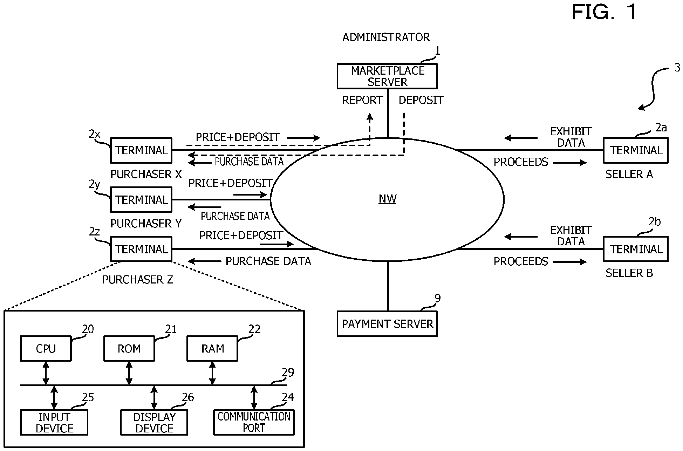

FIG. 1 is a configuration diagram illustrating an example of a network system 3. The network system 3 includes: a marketplace server 1; terminals 2a and 2b operated by sellers A and B, respectively; terminals 2x to 2z operated by purchasers X to Z, respectively; and a payment server 9. The marketplace server 1, the terminals 2a and 2b, the terminals 2x to 2z, and the payment server 9 communicate with each other through a network NW such as the Internet, for example.

The marketplace server 1 provides a transaction service for data such as contents. For example, the sellers A and B exhibit data on the marketplace server 1 by operating the terminals 2a and 2b. The purchasers X to Z purchase the data exhibited on the marketplace server 1. The marketplace server 1 is an example of a data transaction processing apparatus.

At this time, the purchasers X to Z conduct, on the marketplace server 1, a process of paying the money calculated by adding a deposit to the price of the data to purchase. The deposit is paid to ensure that when the purchased data is data exhibited by an illegitimate distributor, the purchasers X to Z report the illegitimacy of the distributor.

For example, in the case where the purchaser X transmits a report on the illegitimacy of a distributor from the terminal 2x to the marketplace server 1, the administrator of the marketplace server 1 verifies the data to check whether the report is true or not. If the report is true, the administrator refunds money within the deposit from the marketplace server 1 to the terminal 2x of the purchaser X.

For this reason, the purchasers X to Z are encouraged to actively report illegitimate distributors to the marketplace server 1 by the refunds. Hence, the administrator is allowed not to verify all the data exhibited on the marketplace server 1 and the burden is reduced. The payment process from the terminals 2x to 2z to the marketplace server 1 and the refund process from the marketplace server 1 to the terminals 2x to 2z are conducted through the payment server 9, for example, but will be described as processes between the marketplace server 1 and the terminals 2x to 2z in the following example for the sake of convenience.

The terminals 2x to 2z and the terminals 2a and 2b may be, but are not limited to, for example, personal computers, smartphones, tablet terminals, and the like. Although the configuration of the terminal 2z will be described below as a representative of the terminals 2x to 2z and the terminals 2a and 2b, the other terminals 2x, 2y, 2a, and 2b also have the same configuration as that of the terminal 2z.

The terminal 2z includes a central processing unit (CPU) 20, a read-only memory (ROM) 21, a random-access memory (RAM) 22, a communication port 24, an input device 25, and a display device 26. The CPU 20 is coupled to the ROM 21, the RAM 22, the communication port 24, the input device 25, and the display device 26 through a bus 29 such that signals may be inputted and outputted into and from each other.

The ROM 21 stores a program for driving the CPU 20. The RAM 22 functions as a working memory of the CPU 20. The communication port 24 is, for example, a wireless local area network (LAN) circuit and processes communications between the CPU 20 and the marketplace server 1.

The input device 25 is a device used to input information. The input device 25 may be, for example, a keyboard, a mouse, a touch panel, or the like. The input device 25 outputs inputted information to the CPU 20 through the bus 29.

The display device 26 is a device which displays information. The display device 26 may be, for example, a display, a touch panel, a printer, or the like. The display device 26 acquires information from the CPU 20 through the bus 29 and displays the information.

The CPU 20 executes various sequential processes, which will be described later, by communicating with the marketplace server 1 from the communication port 24 through the network NW. The terminals 2x to 2z may use circuits such as a field-programmable gate array (FPGA) and an application specified integrated circuit (ASIC) instead of the CPU 20 or together with the CPU 20.

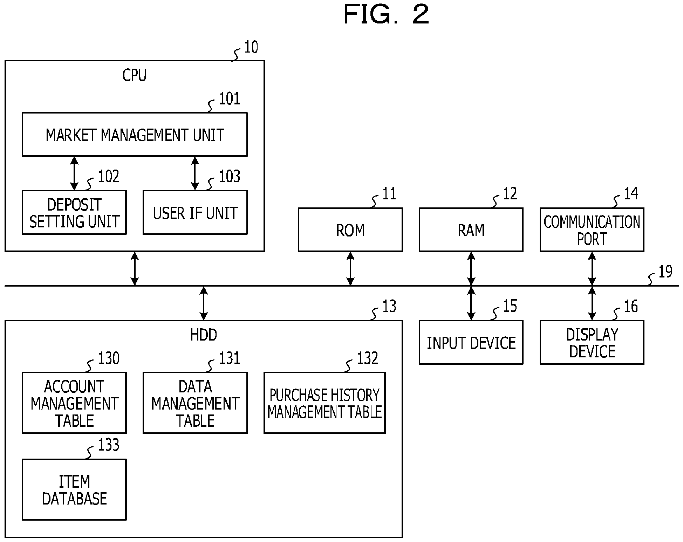

FIG. 2 is a configuration diagram illustrating an example of the marketplace server 1. The marketplace server 1 includes a CPU 10, a ROM 11, a RAM 12, a hard disk drive (HDD) 13, a communication port 14, an input device 15, and a display device 16. The CPU 10 is coupled to the ROM 11, the RAM 12, the HDD 13, the communication port 14, the input device 15, and the display device 16 through a bus 19 such that signals may be inputted and outputted into and from each other. The CPU 10 is an example of a computer. The marketplace server 1 may include another storage unit such as a memory instead of the HDD 13.

The ROM 11 stores a program for driving the CPU 10. The program stored includes for example an operating system (OS) and a data transaction processing program for executing the data transaction processing method of the embodiment. The RAM 12 functions as a working memory for the CPU 10. The communication port 14 is, for example, a wireless LAN card or a network interface card (NIC) and processes communications between the CPU 10 and the marketplace server 1.

The input device 15 is a device used to input information. The input device 15 may be, for example, a keyboard, a mouse, a touch panel, or the like. The input device 15 outputs inputted information to the CPU 10 through the bus 19.

The display device 16 is a device which displays information. The display device 16 may be, for example, a display, a touch panel, or the like. The display device 16 acquires information from the CPU 10 through the bus 19 and outputs the information.

Once the CPU 10 reads the program from the ROM 11, a market management unit 101, a deposit setting unit 102, and a user interface unit (user IF unit) 103 are formed as functions. The market management unit 101 conducts various processes regarding the transaction of data between the sellers A and B and the purchasers X to Z. The deposit setting unit 102 conducts a process of setting a deposit in accordance with an instruction from the market management unit 101. The user IF unit 103 receives input operation made by the administrator on the input device 15 and conducts various processes. The market management unit 101 is an example of a transaction processing unit.

The HDD 13 stores an account management table 130, a data management table 131, a purchase history management table 132, and an item database 133.

In the account management table 130, account information on the sellers A and B and the purchasers X to Z is registered. The communication port 14 processes communications between the terminals 2a and 2b of the sellers A and B and the terminals 2x to 2z of the purchasers X to Z, who are registered in the account management table 130, and the CPU 10 and does not permit communications between a terminal that is not registered in the account management table 130 and the CPU 10.

In the item database 133, data which are items uploaded from the terminals 2a and 2b of the sellers A and B are stored. In the data management table 131, item names, prices, and the like set by the sellers A and B from the terminals 2a and 2b are registered. In the purchase history management table 132, items purchased by the purchasers X to Z from the terminals 2x to 2z, amounts of payments, and the like are registered.

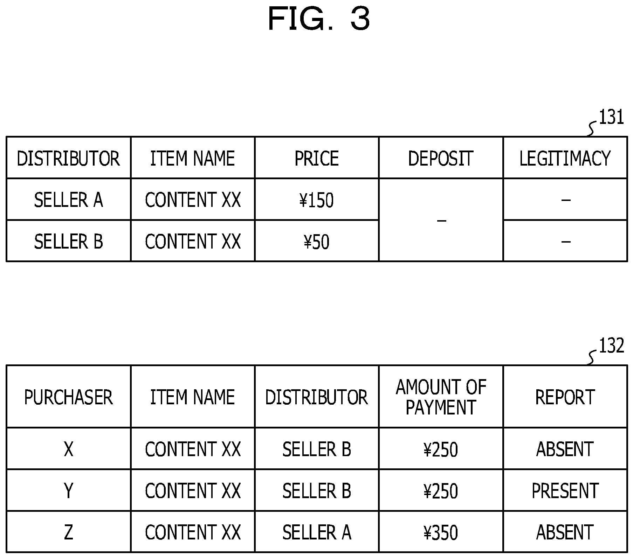

FIG. 3 is a diagram illustrating examples of the data management table 131 and the purchase history management table 132. In the data management table 131, distributors, item names, prices, deposits, and legitimacy are registered. The distributors indicate IDs of the sellers A and B who exhibit data on the marketplace server 1. The item names are names of data exhibited as items (for example, contents XX) and are registered by the sellers A and B.

The prices are prices of data and are registered by the sellers A and B. The deposits are registered by the deposit setting unit 102. The legitimacy is legitimacy of each of the sellers A and B of the distributors. Once data are verified in accordance with the reports made by the purchasers X to Z, the results of the verification are registered.

In the purchase history management table 132, purchasers, item names, distributors, amounts of payments, and reports are registered. The purchasers are the purchasers X to Z who purchased data. The item name is the name of the purchased data. The distributors are sellers A and B of the purchased data. The amounts of payments are amounts of money paid by the purchasers X to Z at the time of purchasing the data. The reports indicate whether a report on the illegitimacy of a distributor of the purchased data is present or not.

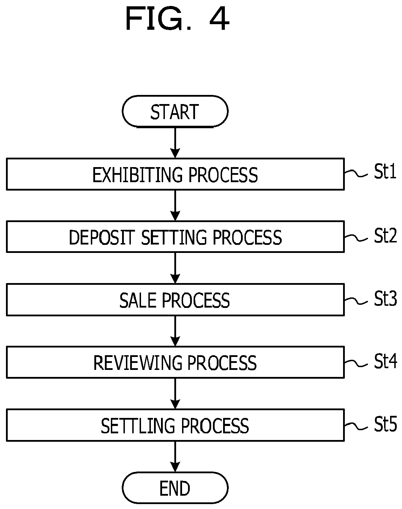

FIG. 4 is a flowchart illustrating an example of the processes of the marketplace server 1. First, the marketplace server 1 conducts an exhibiting process of receiving the exhibition from the sellers A and B (Step St1). The sellers A and B register item data on the marketplace server 1 and set the prices.

Next, the marketplace server 1 conducts a deposit setting process of setting deposits for ensuring the purchasers X to Z report illegitimacy of distributors of data (Step St2). The encourages the purchasers X to Z to report illegitimacy of distributors. The method of setting the amount of a deposit will be described later.

Next, the marketplace server 1 conducts a sale process of selling data to the purchasers X to Z (Step St3). At this time, the purchasers X to Z select data to purchase and the marketplace server 1 requests the terminals 2x to 2z of the purchasers X to Z to pay for the data. The payments of the data are amounts calculated by adding deposits to the prices set by the sellers A and B. The marketplace server 1 transmits the data to the terminals 2x to 2z in response to the payments from the terminals 2x to 2z of the purchasers X to Z.

Next, the marketplace server 1 conducts a reviewing process of receiving a report on the illegitimacy of a distributor (hereinafter, referred to as a "violation report") from the terminals 2x to 2z of the purchasers X to Z (Step St4). Once receiving a violation report, the administrator of the marketplace server 1, for example, verifies the data to check whether the violation report is true or not, and registers the result to the marketplace server 1.

Next, the marketplace server 1 conducts a settling process of settling proceeds and deposits for the data (Step St5). At this time, the marketplace server 1 pays the proceeds for the data to the terminals 2a and 2b of the sellers A and B, but does not pay the proceeds to the terminals 2a and 2b of the sellers A and B who are found to be illegitimate distributors by the violation report. The marketplace server 1 refunds money within the deposit to the terminals 2x to 2z of the purchasers X to Z who made the violation report and to the terminals 2x to 2z of the purchasers X to Z who purchased data from the legitimate distributors. The amount of refund will be described later.

In this way, the marketplace server 1 processes transaction of data between the sellers A and B and the purchasers X to Z. Examples of sequences of the processes of Steps St1 to St5 described above will be described below.

In the following examples, a seller A is an example of a legitimate distributor (a first distributor, a second distributor) and a seller B is an example of an illegitimate distributor. The sellers A and B each exhibit data of a content XX of the same type with no significant difference to the marketplace server 1 as an example of item data.

The purchasers X and Y each purchase data of the content XX from the seller B who is an illegitimate distributor while the purchaser Z purchases data of the content XX from the seller A who is a legitimate distributor. The purchaser Y makes a violation report on the seller B to the marketplace server 1, and the marketplace server 1 refunds part of the deposit to the terminal 2y of the purchaser Y.

In the following examples, the payment and the refund are conducted using Japanese yen as currency between the terminals 2a and 2b of the sellers A and B, the terminals 2x to 2z of the purchasers X to Z, and the marketplace server 1. The embodiment is not limited to this and another currency such as US dollar or a virtual currency. Although the payment and the refund are conducted through, for example, the payment server 9, the process of which will be omitted in the following description.

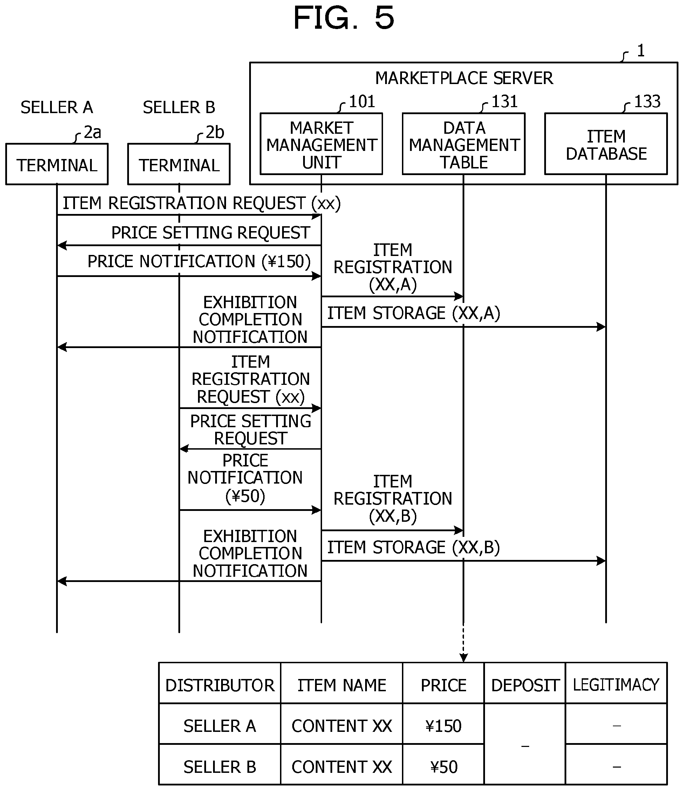

FIG. 5 is a sequence diagram illustrating an example of the exhibiting process (St1). This sequence is executed by the CPUs 20 of the terminals 2a and 2b and the CPU 10 of the market management unit 101 transmitting and receiving various messages through the communication ports 24 and 14. The same also applies to sequences illustrated hereinbelow.

The terminal 2a of the seller A transmits an item registration request message for the content XX to the marketplace server 1. The market management unit 101 transmits a price setting request message to the terminal 2a in response to the item registration request message. The seller A determines the price of the content XX to for example 150 yen and inputs the price using the input device 25 of the terminal 2a. The terminal 2a transmits a price notification message containing price information (150 yen) to the marketplace server 1.

The market management unit 101 registers data of the content XX of the seller A to the data management table 131 as an item upon receipt of the price notification message (see "Item Registration"). In this way, the seller A of the distributor, the content XX of the item name, and the price 150 yen are registered to the data management table 131. The market management unit 101 stores data of the content XX of the seller A in the item database 133 as an item (see "Item Storage").

Thereafter, the market management unit 101 transmits an exhibition completion notification message to the terminal 2a. The seller A confirms the exhibition completion notification message received by the terminal 2a from the display device 26, for example.

The marketplace server 1 executes the same sequence as that for the terminal 2a of the seller A with the terminal 2b of the seller B. The seller B sets the prices of the content XX to, for example, 50 yen. In this way, the seller B of the distributor, the content XX of the item name, and the price 50 yen are registered to the data management table 131. The market management unit 101 stores the data of the content XX of the seller B to the item database 133 as an item.

In this way, the data of the contents XX are registered to the marketplace server 1 from the sellers A and B.

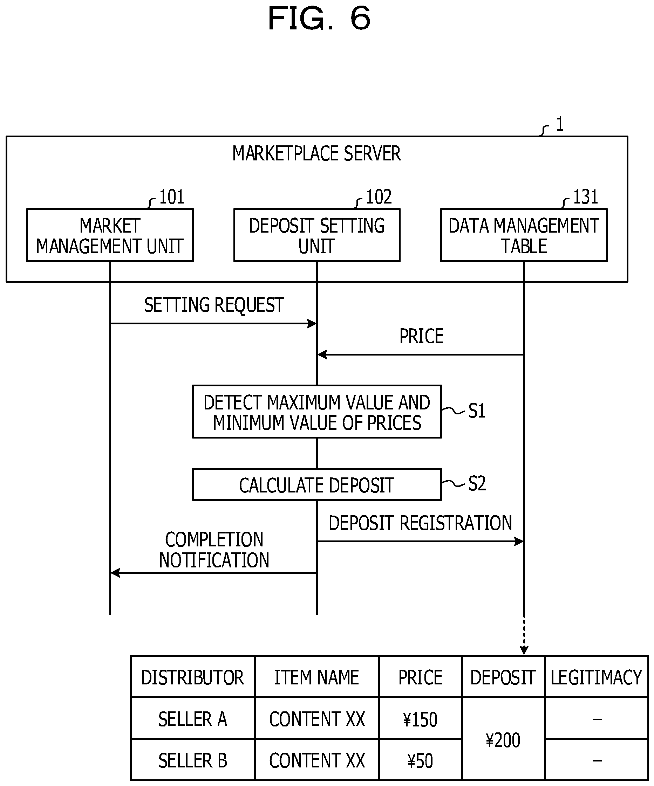

FIG. 6 is a sequence diagram illustrating an example of the deposit setting process (St2). The market management unit 101 requests the deposit setting unit 102 to set the deposit (see "Setting Request"). The deposit setting unit 102 acquires the prices of each content XX of the sellers A and B from the data management table 131 in response to the request.

The deposit setting unit 102 detects the maximum value and the minimum value for the price of the content XX (Sign S1). Next, the deposit setting unit 102 calculates the deposit (Sign S2).

$$α = Pmax-Pmin+β ... (1)$$

The deposit setting unit 102 calculates the deposit $α$ from the above equation (1). In the equation (1), the variable Pmax is the maximum value (150 yen) for the price and the variable Pmin is the minimum value (50 yen) for the price. The variable $β$ is an adjusted value that varies depending on various parameters (the purchase quantity of the content XX, and the like). If the adjusted value $β$ is 100 yen, the deposit $α$ is 200 yen (= 150-50+100).

The deposit setting unit 102 calculates the deposit from Pmax, Pmin, and $β$ for data of the same type. The type of data is determined in accordance with a category based on a label and metadata added to the content XX, for example.

In the equation (1), Pmax-Pmin is a difference between the maximum value and the minimum value for the price of data of the same type. For this reason, for example, the cheaper the seller B of the illegitimate distributor sets the price of the content XX, the larger the Pmax-Pmin becomes, leading to a larger deposit $α$.

In this way, the deposit setting unit 102 sets the deposit $α$ based on a variation in the prices for the distributors (that is Pmax-Pmin). For this reason, even when the seller B of the illegitimate distributor exhibits data with a price cheaper than that of the seller A of the legitimate distributor in order to obtain a large sale, a large variation in the prices makes the deposit $α$ larger, which more effectively encourages the purchasers X to Z to make a violation report.

The administrator of the marketplace server 1 may set the deposit $α$ for the price range of data of an item by adjusting the adjusted value $β$ based on his/her empirical rule, for example.

$$β = Pav×θ ... (2)$$

The deposit setting unit 102 may set the adjusted value $β$ in accordance with the above equation (2), for example. In the equation (2), the variable Pav is an average price of data of the same type, and the variable $θ$ is a predetermined ratio designated by the administrator using the input device 15. For example, when Pav=100 and $θ$=0.5, the adjusted value is 50 yen (= 100×0.5), so that the deposit $α$ is 150 yen (= 150-50+50).

In this way, the deposit setting unit 102 sets, as the deposit $α$, a value calculated by adding the adjusted value $β$ to the value of Pmax-Pmin based on a variation. Thus, the deposit setting unit 102 is capable of setting an appropriate deposit $α$ for the price range of data, for example. Pmax-Pmin is an example of a first value and the adjusted value $β$ is an example of a second value. In the following example, the deposit $α$ is assumed to be 200 yen.

After calculating the deposit, the deposit setting unit 102 registers the deposit to the data management table 131 (see "Deposit Registration"). In this way, 200 yen is registered to the deposit in the data management table 131. Upon completion of the registration, the deposit setting unit 102 notifies the market management unit 101 of this (see "Completion Notification").

In this way, the deposit $α$ is set. The deposit $α$ is added to the payment of data purchased by the purchasers X to Z.

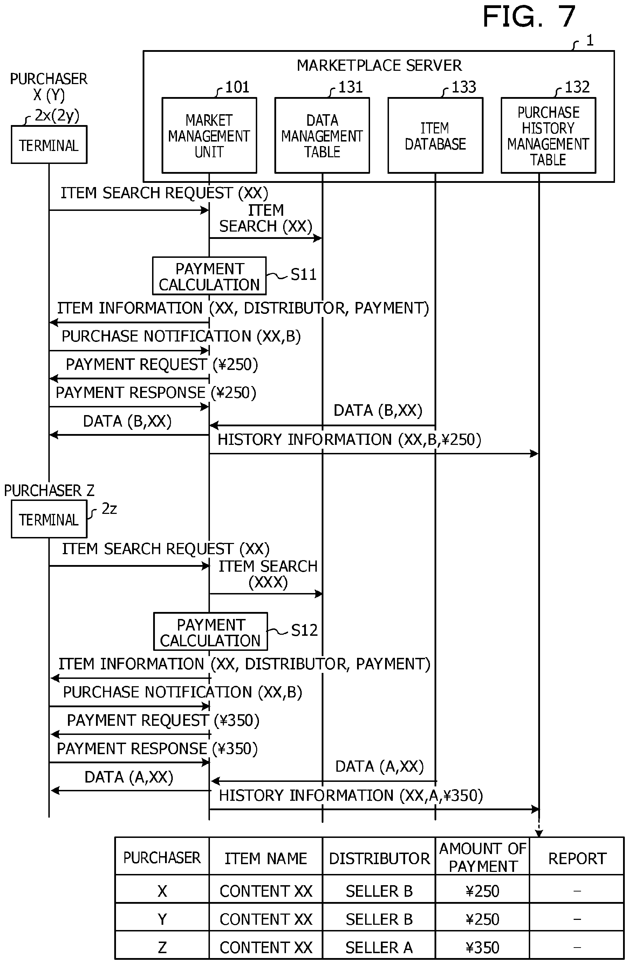

FIG. 7 is a sequence diagram illustrating an example of the sale process (St3). In this example, the purchasers X and Y purchases data of the content XX of an illegitimate distributor while the purchaser Z purchases data of the content XX of a legitimate distributor.

The terminal 2x transmits an item search request message for the content XX to the market management unit 101 in response to the operation of the input device 25 by the purchaser X. The market management unit 101 searches the data management table 131 for the item name "content XX" upon receipt of the item search request message (see "Item Search").

At this time, the market management unit 101 searches the data management table 131 for the distributor and the price using the item name "content XX" designated in the item search request message as a search key. The contents of the data management table 131 at this time are as illustrated in FIG. 6.

Next, the market management unit 101 calculates the payment of the data by adding the deposit registered in the data management table 131 to the price of the data of the content XX (Sign S11). Since the deposit for the content XX is 200 yen, the market management unit 101 calculates the price of the data of the content XX of the seller A as 350 yen (= 150 yen + 200 yen) and calculates the price of the data of the content XX of the seller B as 250 yen (= 50 yen + 200 yen).

The market management unit 101 notifies the terminal 2x of the distributors (sellers A and B) and the prices (350 yen and 250 yen) of the data of the content XX as item information of the search result for the item search request message. The item information is displayed on the display device 26 of the terminal 2x, for example. The purchaser X operates the input device 25 to purchase the data of the content XX of the seller B based on the item information. The terminal 2x transmits a purchase notification message for the content XX of the seller B to the marketplace server 1 in response to the operation.

The market management unit 101 transmits a payment request message for the payment (250 yen) of the data of the content XX of the seller B to the terminal 2x upon receipt of the purchase notification message. Upon receipt of the payment request message, the terminal 2x displays the payment on the display device 26. The purchaser X conducts the operation for the payment using the input device 25. In response to the operation, the terminal 2x transmits a payment response message for the payment (250 yen) to the marketplace server 1.

Upon receipt of the payment response message, the market management unit 101 reads the data of the content XX of the seller B from the item database 133. The market management unit 101 transmits the read data to the terminal 2x. The terminal 2x receives the data and displays that effect on the display device 26. In this way, the purchaser X completes the purchase of the data of the content XX.

After transmitting the data, the market management unit 101 registers history information of the purchase of the purchaser X to the purchase history management table 132. The history information contains the item name (the content XX), the distributor (the seller B), and the amount of payment (250 yen). The purchaser Y also conducts the purchase process for the data of the content XX of the seller B from the terminal 2y to the marketplace server 1. At this time, the same sequence as described above is conducted between the terminal 2y and the marketplace server 1.

The purchaser Z conducts the purchase process for the data of the content XX of the legitimate seller A from the terminal 2z to the marketplace server 1. At this time, the market management unit 101 calculates 350 yen (150+200), which is different from that of the other purchasers X and Y, as the amount of payment for the purchaser Z (Sign S12). The same sequence as described above is conducted between the terminal 2z and the marketplace server 1 except that the amount of payment is different from that for the seller B.

As described above, the market management unit 101 requests the terminals 2x to 2z of the purchasers X to Z of any data among data provided by a plurality of distributors to pay for the data and transmits the data to the terminals 2x to 2z of the purchasers X to Z in response to the payment. In this way, the marketplace server 1 executes the transaction of the data between the sellers A and B and the purchasers X to Z.

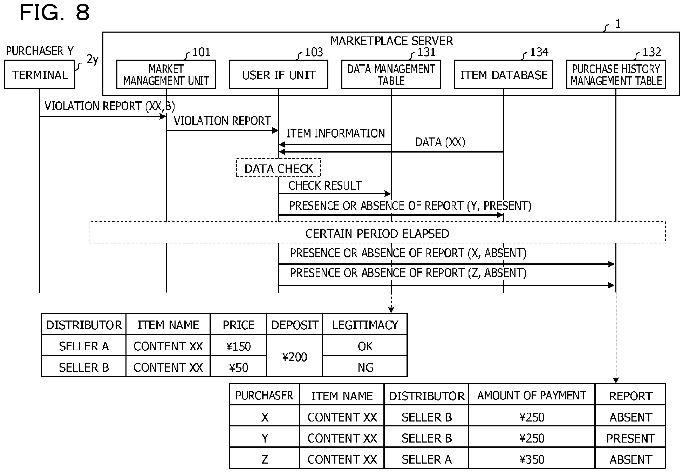

FIG. 8 is a sequence diagram illustrating an example of the reviewing process (St4). In this example, only the purchaser Y makes the violation report while the other purchasers X and Z do not make the violation report.

The market management unit 101 accepts the violation report from the terminals 2x to 2z of the purchasers X to Z only for a predetermined period from the dates of purchase of the data of the purchasers X to Z, for example. The purchaser Y finds that the seller B is an illegitimate distributor as a result of checking the purchased data, and transmits the violation report for the content XX of the seller B to the marketplace server 1 by operating the input device 25.

Upon receipt of the violation report from the terminal 2y, the market management unit 101 outputs information of the violation report to the user IF unit 103. The user IF unit 103 outputs the information of the violation report to the display device 16 to display the content of the information on the display device 16. In response to the violation report, the administrator of the marketplace server 1 operates the input device 15 to check the data of the sellers A and B of the content XX for which the violation report has been made.

At this time, in response to the operation, the user IF unit 103 reads item information on the content XX from the data management table 131 and reads the data of the content XX from the item database 133. The data are visualized by an application (not illustrated) executed by the CPU 10, for example, to be displayed on the display device 16. The administrator determines whether the data of the content XX is illegitimate or not for each of the sellers A and B.

In a case where data are the content XX such as a music or a movie, for example, as in this example, since the producer or the distributor of the data is apparent, whether the data are illegitimate copied data or not is determined from the background of the seller B who is the distributor of the content XX. In a case where data are information of Forest Ledger owned only by each local government, for example, unlike this example, if the distributor of the data is a seller other than the local governments, it is determined that the data are illegitimate copied data. The determination on illegitimate data may be conducted manually or by using software.

The administrator registers the result of checking data to the data management table 131. Since the data of the content XX of the seller A are not illegitimate but the data of the content XX of the seller B are illegitimate, "OK" (legitimate) is registered as the legitimacy of the seller A and "NG" (illegitimate) is registered as the legitimacy of the seller B to the data management table 131. The administrator deletes the exhibition of all data registered by the seller B who is the illegitimate distributor.

The administrator registers the fact that there was the violation report from the purchaser Y to the purchase history management table 132. To the purchase history management table 132, "Present" is registered as the report from the purchaser Y.

Thereafter, if there is no violation report from the terminals 2x and 2z of the purchasers X and Z even after the predetermined period from the dates of purchase of the other purchasers X and Z, the market management unit 101 registers the fact that there was no violation report from the purchasers X and Z to the purchase history management table 132. To the purchase history management table 132, "Absent" is registered as the reports from the purchasers X and Z.

As described above, the marketplace server 1 registers the legitimacy of a distributor to the data management table 131 and registers the presence or absence of violation reports from the purchasers X to Z to the purchase history management table 132. The marketplace server 1 determines whether to refund the deposit to the purchasers X to Z based on the legitimacy of the distributors and the presence or absence of violation reports.

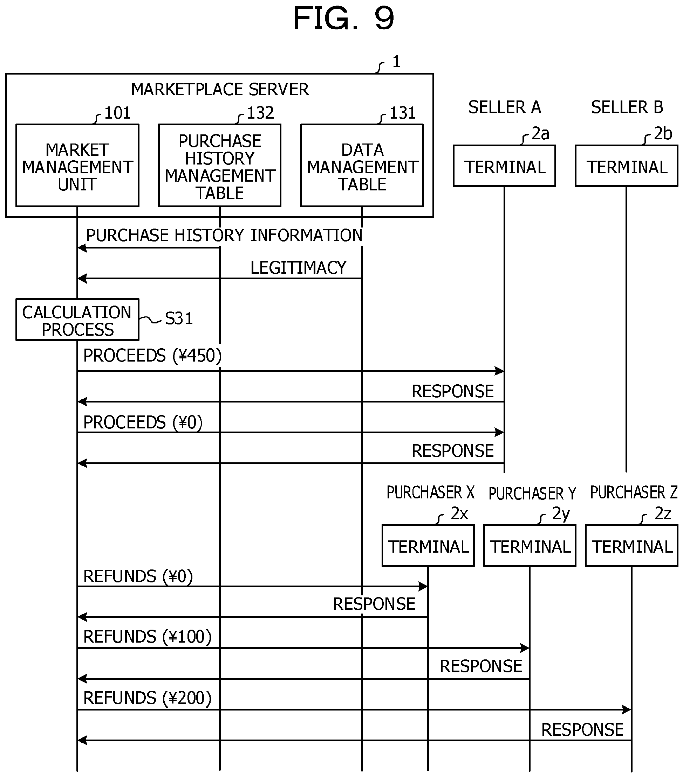

FIG. 9 is a sequence diagram illustrating an example of the settling process (St5). In the settling process, the payment of proceeds to the sellers A and B and the refund of parts of the deposits are conducted.

The market management unit 101 acquires the purchase history information (purchaser, item name, distributor, amount of payment, and report) on the data of the content XX form the purchase history management table 132 and acquires legitimacy information on the sellers A and B from the data management table 131. The market management unit 101 conducts a calculation process of calculating the proceeds of each seller A, B and the amount of refund to each purchaser X to Z from the purchase history information and legitimacy information (Sign S31).

The market management unit 101 sets the proceeds to be paid to the seller B who is the illegitimate distributor to 0 yen in accordance with the legitimacy information on the distributor. This is because since the seller B does not have the right of exhibiting data, the seller B also does not have the right of obtaining the proceeds.

$$\text{Proceeds} = \text{Price} \times \text{Total Number of Purchases} \dots (3)$$

The market management unit 101 calculates the proceeds to be paid to the seller A from the above equation (3). The market management unit 101 calculates the proceeds for the seller A by multiplying the price of the data of the content XX of the seller A by the purchase quantity of the data of the content XX of the sellers A and B.

Since the data of the content XX was purchased three times by the purchasers X to Z according to the purchase history management table 132, the purchase quantity is 3. To the data management table 131, 150 yen is registered as the price of the data of the content XX of the seller A.

Hence, the market management unit 101 calculates the proceeds of the seller A as 450 yen (= 150×3). The reason why the number of sales of the seller B who is the illegitimate distributor is taken into consideration for the calculation of the proceeds of the seller A is based on a thought that the number of sales of the seller B is originally the number of sales the seller could have made.

$$\text{Amount of Refund} = \text{Amount of Payment of Purchaser} - \text{Price of Legitimate Distributor} \dots (4)$$

The market management unit 101 calculates the amount of refund of the deposit to the purchaser Y who has made the violation report from the above equation (4). The market management unit 101 calculates the amount of refund by subtracting the price of the data of the content XX of the seller A from the amount of payment of the purchaser Y. The amount of refund is not limited as long as the amount is within the deposit.

To the purchase history management table 132, 250 yen is registered as the amount of payment of the purchaser Y. To the data management table 131, 150 yen is registered as the price of the data of the content XX of the seller A.

Hence, the market management unit 101 calculates the amount of refund to the purchaser Y as 100 yen (= 250-150).

The market management unit 101 also calculates the amount of refund of the deposit to the purchaser Z who purchased the data from the seller A who is the legitimate distributor from the equation (4). The market management unit 101 calculates the amount of refund by subtracting the price of the data of the content XX of the seller A from the amount of payment of the purchaser Z. To the purchase history management table 132, 350 yen is registered as the amount of payment of the purchaser Z.

Hence the market management unit 101 calculates the amount of refund to the purchaser Z as 200 yen (= 350-150). This amount of refund is equal to the deposit.

The market management unit 101 pays the proceeds 450 yen to the terminal 2a of the seller A. Upon receipt of the payment, the terminal 2a returns a response to the marketplace server 1.

The market management unit 101 pays the proceeds 0 yen to the terminal 2b of the seller B. The market management unit 101 actually notifies the terminal 2b that there is no proceeds to be paid. Upon receipt of the notification, the terminal 2b returns a response to the marketplace server 1.

The market management unit 101 pays the amount of refund 0 yen to the terminal 2x of the purchaser X. The market management unit 101 actually notifies the terminal 2x that there is no deposit to be paid. Upon receipt of the notification, the terminal 2x returns a response to the marketplace server 1.

The market management unit 101 pays the amount of refund 100 yen to the terminal 2y of the purchaser Y. Upon receipt of the payment, the terminal 2y returns a response to the marketplace server 1.

The market management unit 101 pays the amount of refund 200 yen to the terminal 2z of the purchaser Z. Upon receipt of the payment, the terminal 2z returns a response to the marketplace server 1.

In this way, the market management unit 101 pays the proceeds to the seller A and refunds the amount of money within the deposit to the purchasers Y and Z.

As described above, the market management unit 101 refunds the amount of money within the deposit to the terminal 2y of the purchaser Y in response to the violation report of the data from the terminal 2y of the purchaser Y. Hence, the market management unit 101 is capable of using the refund to motivate the purchaser Y to actively make a violation report. The marketplace server 1 is thus capable of encouraging the purchaser Y to make a report on the seller B who is the illegitimate distributor.

If the purchaser Y checks the data and makes the violation report, it is possible for the administrator to omit the checking of all data registered to the marketplace server 1.

In the process of refunding to the purchaser Y, the market management unit 101 refunds the amount of money remaining after subtracting the price of the data provided by the seller A who is the legitimate distributor from the amount of payment of the purchaser Y in accordance with the equation (4). The market management unit 101 pays the amount of money corresponding to the price of the data to the terminal 2a of the seller A. Hence, even when the purchasers X and Y purchase the data from the seller B who is the illegitimate distributor, the proceeds of the seller A is compensated for in accordance with the proceeds of the seller B.

The market management unit 101 refunds the amount of money within the deposit to the terminal 2z of the purchaser Z who purchased the data provided by the seller A who is the legitimate distributor in accordance with the violation report on the data from the terminal 2y of the purchaser Y. Hence, the market management unit 101 is capable of using the refund to motivate the purchaser Z to actively purchase the data from the legitimate distributor.

(Example of Applying Deposited Money of Sellers A and B to Deposit)

Although in the above-described embodiment, the purchasers X to Z pay all the amount of the deposit, the embodiment is not limited thereto. Part of the deposit may be paid by the sellers A and B with deposited money.

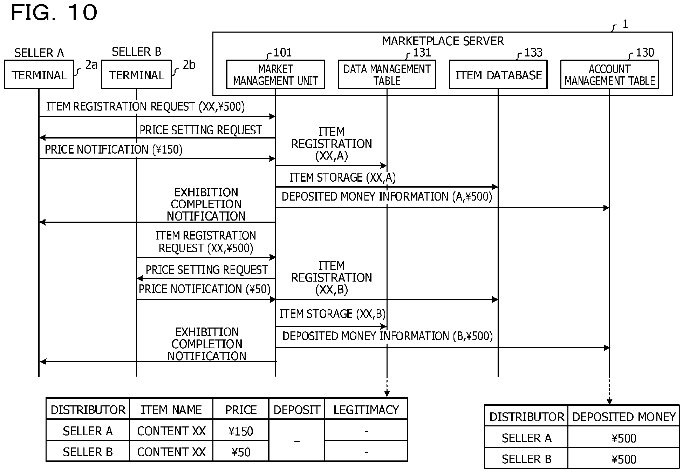

FIG. 10 is a sequence diagram illustrating an example of an exhibiting process (St1) in a case where the sellers A and B pay deposited money. In FIG. 10, the description of processes common to FIG. 5 will be omitted.

The sellers A and B pay deposited money when registering data of items to the marketplace server 1. The terminals 2a and 2b of the sellers A and B add information on the payment of deposited money of 500 yen to the item registration request message as an example. The marketplace server 1 thus receives the payment of 500 yen from the seller A and B.

Upon receipt of the item registration request message, the market management unit 101 registers the amount of the deposited money (500 yen) to the account management table 130. To the account management table 130, the amounts of the deposited money of the sellers A and B are registered in association with the accounts (for example, IDs) of the sellers A and B.

In this way, the market management unit 101 receives the payment of the deposited money from the terminals 2a and 2b of the sellers A and B. The deposited money is an example of a grant money for supplementing the deposit.

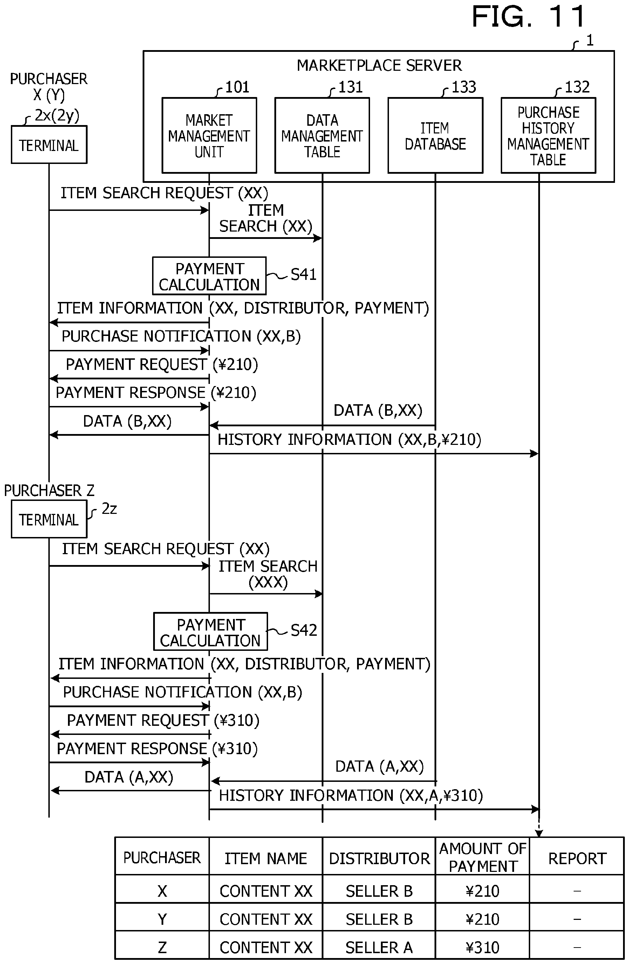

FIG. 11 is a sequence diagram illustrating an example of a sale process (St3) in the case where the sellers A and B pay deposited money. In

FIG. 11, the description of processes common to FIG. 7 will be omitted.

In the case where the amounts of the deposited money are registered to the account management table 130, the market management unit 101 reduces the payments requested to the terminals 2x to 2z of the purchasers X to Z.

$$Pd = Po + 0.8 \times \alpha \ ... \ (5)$$

The market management unit 101 calculates the payment $Pd$ from the above equation (5) in a payment calculation process (Signs S41, S42). In the equation (5), the variable $Po$ is the price of data registered in the data management table 131.

In the equation (5), the deposit $\alpha$ is multiplied by 0.8. Hence, the deposit $\alpha$ contained in the payments of the purchasers X to Z is 20% lower than the case of FIG. 7. That is, the purchasers X to Z pay 80% of the deposit and the sellers A and B pay the remaining 20% with the deposited money.

When the deposit $\alpha$ is 200 yen, the amount of payment of the purchasers X and Y who purchased data from the seller B is 210 yen (= $50 + 0.8 \times 200$), and the amount of payment of the purchaser Z who purchased data from the seller A is 310 yen (= $150 + 0.8 \times 200$).

Thus, the market management unit 101 requests the terminals 2x and 2y to pay 210 yen and requests the terminal 2z to pay 310 yen. The purchasers X and Y pay 210 yen from the terminals 2x and 2y to the marketplace server 1 and the purchaser Z pays 310 yen from the terminal 2z to the marketplace server 1. The market management unit 101 registers the amounts of payment of the purchasers X to Z to the purchase history management table 132 as history information.

In this way, the market management unit 101 reduces the deposit to add the payment of the data in response to the payment of the deposited money from the terminals 2a and 2b of the distributors. For this reason, the payment of the deposit on the purchasers X to Z is reduced. The marketplace server 1 is thus capable of encouraging the purchasers X to Z to more actively make a violation report.

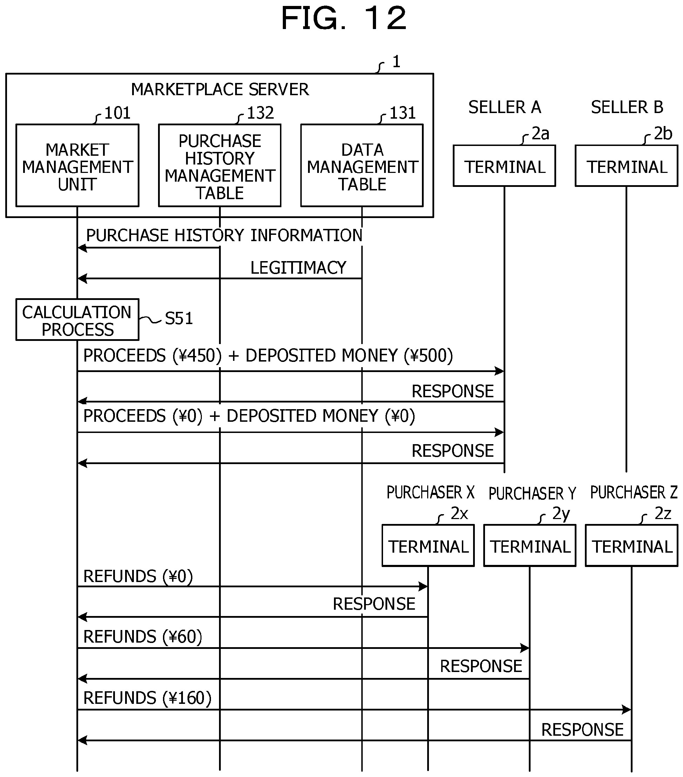

FIG. 12 is a sequence diagram illustrating an example of a settling process (St5) in the case where the sellers A and B pay deposited money. In FIG. 12, the description of processes common to FIG. 9 will be omitted.

In a calculation process (Sign S51), the marketplace server 1 calculates the proceeds to be paid to the sellers A and B and the amounts of refund to the purchasers X to Z. The amount of refund to the purchaser Y who made the violation report is 60 yen (= 210-150) according to the equation (4), and the amount of refund to the purchaser Z who purchased the data from the seller A who is the legitimate distributor is 160 yen (= 310-150) according to the equation (4). The proceeds of the sellers A and B are the same as those in the case of FIG. 12.

The market management unit 101 pays the proceeds and the deposited money to the terminal 2a of the seller A who is the legitimate distributor but does not pay the proceeds or the deposited money to the terminal 2b of the seller B who is the illegitimate distributor. In this way, the seller B forfeits the deposited money as a penalty for selling the illegitimate copied data. Hence, the exhibition from an illegitimate distributor to the marketplace server 1 is suppressed.

(Example of Dynamically Adjusting Deposit)

In the above examples, it is assumed that the adjusted value $\beta$ for the deposit is not changed (200 yen). However, for example, in a case where the deposit is small, there is a possibility that the number of violation reports made by the purchasers X to Z decreases. In a case where the deposit is large, since the amount of payment increases, there is a possibility that the purchasers X to Z refrain from purchasing.

In view of this, the marketplace server 1 may dynamically change the deposit by adjusting the adjusted value $\beta$ in accordance with the number of times for which data are purchased (hereinafter, referred to as the "purchase quantity") and the number of times the violation report was made (hereinafter, referred to as the "violation report quantity").

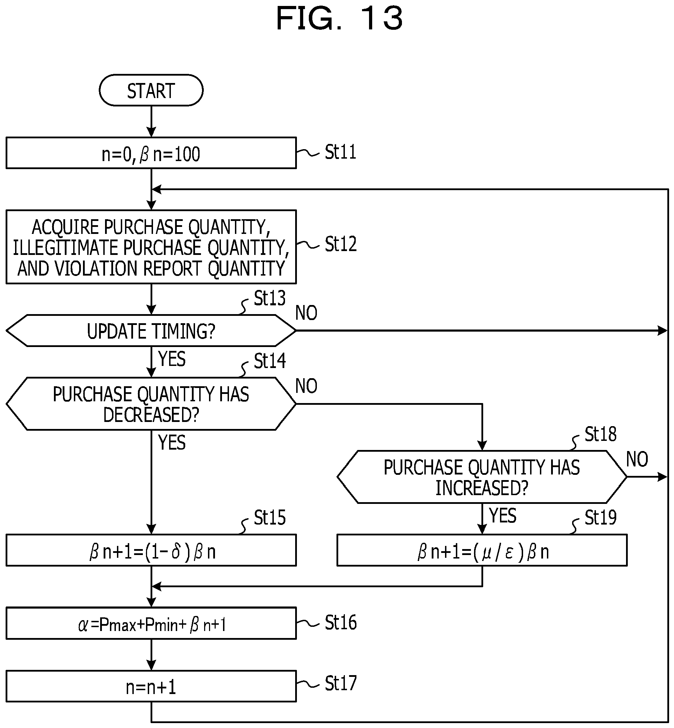

FIG. 13 is a flowchart illustrating an example of a deposit change process. The deposit setting unit 102 dynamically adjusts the adjusted value $\beta$ and notifies the market management unit 101 of the deposit.

The deposit setting unit 102 first initializes a variable n (= 0, 1, 2, ...) and the adjusted value $\beta_n$ (Step St11). As an example, the initial value of the variable n is 0 and the initial value of the adjusted value $\beta_n$ is 100.

Next, the deposit setting unit 102 refers to the data management table 131 and the purchase history management table 132 to acquire the purchase quantities of the sellers A and B and the quantity of purchases from the seller B who is the illegitimate distributor (hereinafter, referred to as the "illegitimate purchase quantity") and the violation report quantity (Step St12).

The purchase quantity from each seller A, B may be acquired from the purchase histories of the sellers A and B registered to the purchase history management table 132. The illegitimate purchase quantity may be acquired, in the purchase history management table 132, from the number of the purchase history of the seller B for which the legitimacy in the data management table 131 is "NG". The violation report quantity may be acquired from the number of the "Present" of reports registered to the purchase history management table 132.

Next, the deposit setting unit 102 determines whether the timing of updating the adjusted value $\beta$ (hereinafter, referred to as the "update timing") has come or not (Step St13). The update timing may be determined at fixed cycles or as appropriate depending of the purchase quantity. If the update timing has not come (No in Step St13), the process of Step St12 is executed again.

If the update timing has come (Yes in Step St13), the deposit setting unit 102 determines whether the purchase quantity newly acquired has decreased from the purchase quantity previously acquired (Step St14).

$$\beta_{n+1} = (1-\delta)\beta_n \quad ... \quad (6)$$

$$\delta = (\gamma_n - \gamma_{n+1})/\gamma_n \quad ... \quad (7)$$

If the purchase quantity has decreased (Yes in Step St14), the deposit setting unit 102 calculates the adjusted value $\beta_{n+1}$ in accordance with the above equation (6) (Step St15). In the equation (6), the variable $\delta$ is calculated from

the equation (7). In the equation (7), the variable $\gamma n+1$ is the purchase quantity newly acquired and the variable $\gamma n$ is purchase quantity previously acquired. Since the purchase quantity has decreased, yn+1<yn is established and accordingly $\delta<1$ is established. Hence, in the equation (6), a new adjusted value $\beta n+1$ is smaller than the previous adjusted value $\beta n$.

For example, in a case where yn=100 and yn+1=95, the variable $\delta$ is 0.05 (= (100-95)/100). When $\beta_0$=100, the adjusted value $\beta_1$ is 95 (= (1-0.05)×100).

$$\alpha = \text{Pmax-Pmin}+\beta n+1 \ ... \ (8)$$

Next, the deposit setting unit 102 calculates the deposit $\alpha$ from the above equation (8) (Step St16). The market management unit 101 is notified of the deposit $\alpha$.

For example, in a case where Pmax=150, Pmin=50, and $\beta_0$=100, the initial value of the deposit $\alpha$ is 200 (= 150-50+100). When the adjusted value $\beta_1$=95 according to the above example, the new deposit $\alpha$ is 195 (= 150-50+95). The new deposit $\alpha$ (195) is smaller than the initial value (200) of the deposit $\alpha$. In this way, when the purchase quantity has decreased, the deposit setting unit 102 reduces the deposit $\alpha$ in order to increase the purchase quantity.

If the purchase quantity has not decreased (No in Step St14), the deposit setting unit 102 determines whether the purchase quantity has increased (Step St18). If the purchase quantity has not increased (No in Step St18), that is, if the purchase quantity has not changed, the processes after Step St12 are executed again.

$$\beta n+1 = (\mu/\varepsilon)\times\beta n \ ... \ (9)$$

If the purchase quantity has increased (Yes in Step St18), the deposit setting unit 102 calculates the adjusted value $\beta n+1$ in accordance with the above equation (9) (Step St19). In the equation (9), the variable $\mu$ is the illegitimate purchase quantity and the variable $\varepsilon$ is violation report quantity.

For example, when $\mu$=20, $\varepsilon$=4, and $\beta_0$=100, $\beta_1$ is 500 (= (20/4)×100).

Next, the deposit setting unit 102 calculates the deposit $\alpha$ from the above equation (8) (Step St16). The market management unit 101 is notified of the deposit $\alpha$.

For example, when Pmax=100, Pmin=50, and $\beta_0$=100, the initial value of the deposit $\alpha$ is 150 (= 100-50+100). When the adjusted value $\beta_1$=500 according to the above example, the new deposit $\alpha$ is 600 (= 150-50+500). The new deposit $\alpha$ (500) is larger than the initial value (150) of the deposit $\alpha$. In this way, when the purchase quantity has increased, the deposit setting unit 102 increases the deposit $\alpha$ in order to increase the violation report quantity.

After calculating the deposit $\alpha$, the deposit setting unit 102 adds 1 to the variable n (Step St17) and executes the processes after Step St12 again. In this way, the deposit change process is executed.

As described above, the marketplace server 1 adjusts the adjusted value $\beta$ ($\beta n$) in accordance with the purchase quantity of data and the violation report quantity. Hence, the marketplace server 1 is capable of changing the deposit $\alpha$ in order to maintain the balance between the purchase quantity and the violation report quantity.

(Example of Suppressing False Violation Report)

In the above example, if the purchasers X to Z make violation reports without checking the contents of data in order to obtain the right of receiving the refund of the deposit, for example, the administrator suffers a burden of checking many data registered as items to the marketplace server 1. In view of this, as in the following example, if the deposit is not refunded to the purchasers X to Z who has made a false violation report, it is possible to suppress a false violation report.

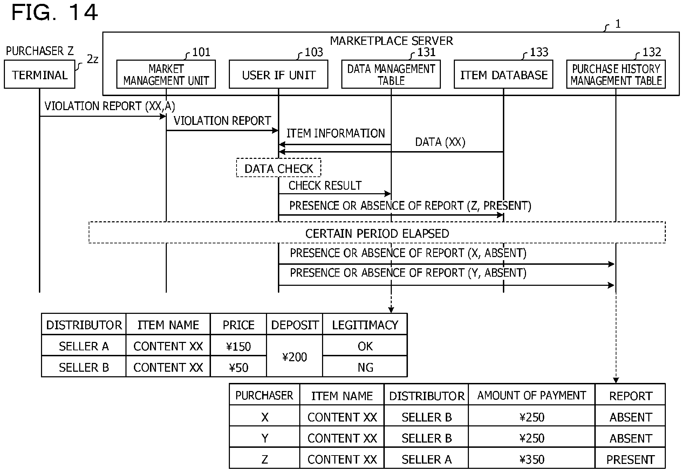

FIG. 14 is a sequence diagram illustrating an example of a reviewing process (St4) in a case where the purchaser Z has made a false violation report. In FIG. 14, the description of processes common to FIG. 8 will be omitted.

In this example, the purchaser Z purchases data of the content XX from the seller A who is the legitimate distributor and makes a false violation report. Upon receipt of a violation report, the user IF unit 103 displays the content of the violation report on the display device 16.

In accordance with the operation of the administrator on the input device 15, the user IF unit 103 reads item information from the data management table 131 and displays the item information on the display device 16, and reads data from the item database 133 and displays the data on the display device 16. The administrator of the marketplace server 1 checks the data of the sellers A and B and inputs the results using the input device 15. In accordance with the input of the results of the check, the user IF unit 103 registers the results of the check (the legitimacy of each distributor) to the data management table 131.

The administrator also registers the fact that there is a violation report from the purchaser Z to the purchase history management table 132. The other purchasers X and Y purchase the data of the content XX from the seller B who is the illegitimate distributor but do not make violation reports even after the predetermined period from the purchases. Hence, the administrator registers the fact that there is no violation report from the purchasers X and Y to the purchase history management table 132.

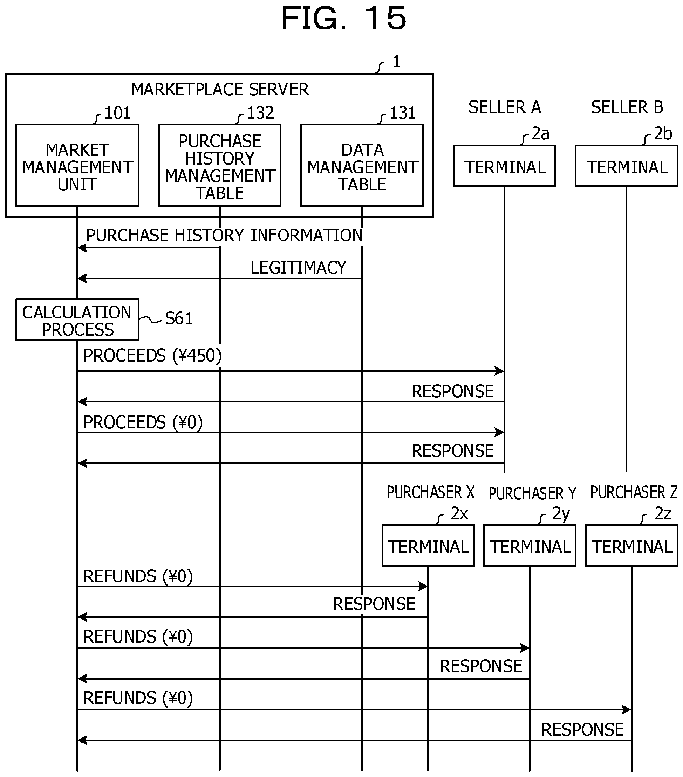

FIG. 15 is a sequence diagram illustrating an example of the settling process (St5) in a case where the purchaser Z has made a false violation report. In FIG. 15, the description of processes common to FIG. 9 will be omitted.

In the calculation process (Sign S61), the market management unit 101 determines that the violation report from the purchaser Z is false based on the legitimacy ("OK") of the seller A registered to the data management table 131. Hence, the market management unit 101 calculates 0 yen as the amount of refund of the deposit to the purchaser Z. Thus, the deposit is not refunded to the terminal 2z of the purchaser Z.

The market management unit 101 determines that there is no violation report from the other purchasers X and Y from the reports ("Absent") registered to the purchase history management table 132. Hence, the market management unit 101 calculates 0 yen as the amount of refund of the deposit to the purchasers X and Y. Thus, the deposit is not refunded to the terminals 2x and 2y of the purchasers X and Y.

In this way, when the distributor of data is legitimate, the market management unit 101 does not refund the amount of money within the deposit to the terminal 2z of the purchaser Z who has made the violation report. Hence, a false violation report is suppressed.

The marketplace server 1 may set an upper limit to the number of times for which the purchasers X to Z may make a violation report (hereinafter, referred to as "report possible number") as in the following example in order to suppress a false violation report.

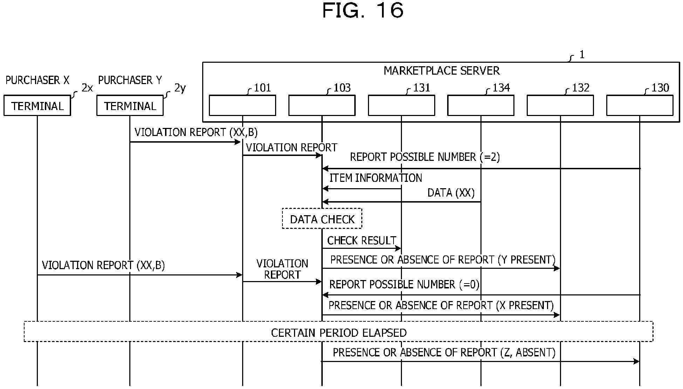

FIG. 16 is a sequence diagram illustrating an example of the reviewing process (St4) in a case where the upper limit is set to the report possible number. In FIG. 16, the description of processes common to FIG. 8 will be omitted.

In this example, the purchasers X and Y purchase data of the content XX from the seller B who is the illegitimate distributor and make violation reports. Upon receipt of a violation report from the purchaser Y, the administrator operates the input device 15 to check the report possible number of the purchaser Y. In accordance with the operation, the user IF unit 103 reads the report possible number from the account management table 130.

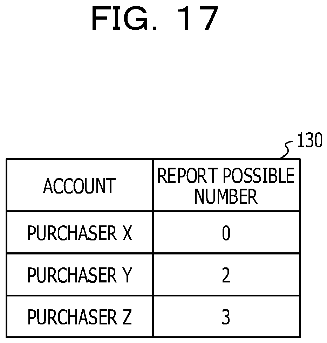

FIG. 17 is a diagram illustrating an example of the account management table 130. To the account management table 130, the report possible number is registered for each of the accounts of the purchasers X to Z. As an example, the report possible number of the purchaser X is 0, the report possible number of the purchaser Y is 2, and the report possible number of the purchaser Z is 3. For example, the market management unit 101 subtracts 1 from the report possible number every time the purchaser X to Z makes a false violation report.

Referring to FIG. 16 again, since the report possible number of the purchaser Y is 2, the administrator operates the input device 15 to register the fact that there is a violation report from the purchaser Y to the marketplace server 1. In accordance with the operation, the user IF unit 103 registers the "Present" of the report of the purchaser Y to the purchase history management table 132.

Upon receipt of the violation report from the purchaser X, the administrator operates the input device 15 to check the report possible number of the purchaser X. In accordance with the operation, the user IF unit 103 reads the report possible number from the account management table 130.

Since the report possible number of the purchaser X is 0, the administrator determines that the purchaser X has no right of making a violation report. The administrator operates the input device 15 to register the fact that there is no violation report from the purchaser X to the marketplace server 1. In accordance with the operation, the user IF unit 103 registers the "Absent" of the report of the purchaser X to the purchase history management table 132.

In this way, once the report possible number becomes 0, even when the purchaser X who has made many false violation reports makes a violation report, the fact that the purchaser X has made a violation report is not registered to the marketplace server 1.

The other purchaser Z purchases data of the content XX from the seller A but does not make a violation report even after the predetermined period from the purchase. For this reason, the administrator registers the fact that there is no violation report from the purchaser Z to the purchase history management table 132.

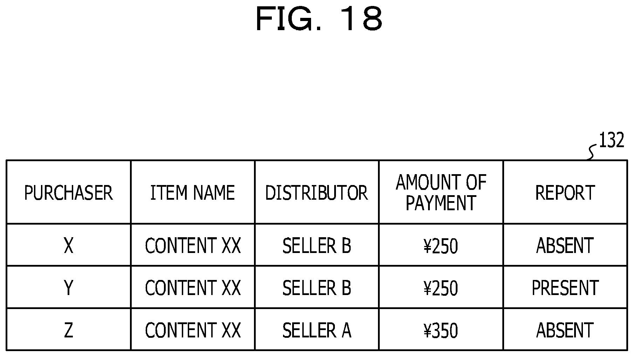

FIG. 18 is a diagram illustrating an example of the purchase history management table 132 after the reviewing process (St4). Although the purchaser X made a violation report, since the report possible number was 0 at the time of the violation report, the "Absent" of the report is registered. Hence, the market management unit 101 does not refund the deposit to the terminal 2x of the purchaser X.

On the other hand, since the purchaser Y made a violation report and the report possible number was 2 at the time of the violation report, the "Present" of the report is registered. For this reason, the market management unit 101 refunds the amount of money within the deposit to the terminal 2y of the purchaser Y. Since the purchaser Z has not made a violation report, the "Absent" of the report is registered.

In this way, the marketplace server 1 is capable of suppressing an improper violation report by setting the upper limit to the report possible numbers of the purchasers X to Z.

The above-described embodiment is a preferred embodiment. However, the embodiment is not limited to this, various modification may be made without departing from the scope of the disclosure.

**Claims**

1. A program that causes a processor included in computer to execute a process, the process comprising:

   requesting a terminal of a purchaser who has purchased data to pay for the data and a deposit;
   transmitting the data to the terminal in response to the payment for the data and the deposit; and
   refunding an amount of money within the deposit to the terminal of the purchaser in response to a report on illegitimacy of a distributor of the data from the terminal of the purchaser.

2. The program according to claim 1, wherein
   the amount of money within the deposit is refunded to a terminal of another purchaser who has purchased the data in response to the report on illegitimacy of the distributor of the data from the terminal of the purchaser.

3. The program according to claim 1, wherein
   in a process of refunding the amount of money within the deposit to the terminal of the purchaser, when the distributor of the data is legitimate, the amount of money within the deposit is not refunded to the terminal of the purchaser.

4. The program according to claim 1, wherein
   the purchaser requests purchase of data from any of a plurality of distributors through the terminal,
   in the process of refunding the amount of money within the deposit, an amount of money obtained by subtracting a price of other data provided by a legitimate second distributor among the plurality of distributors from a price of the data is refunded, and
   further, an amount of money according to the price of the other data is paid to a terminal of the second distributor.

5. The program according to claim 1, wherein the process further comprises:

   receiving payment of a grant money for supplementing the deposit from a terminal of the distributor, wherein an amount of the deposit is reduced in accordance with the payment of the grant money from the terminal of the distributor and is added to the payment of the data.

6. The storage medium according to claim 1, wherein
   the deposit is set based on a variation in prices of data of the plurality of distributors.

7. The program according to claim 6, wherein
   in the process of setting the deposit, a value calculated by adding an adjustable second value to a first value based on the variation is set as the deposit.

8. The program according to claim 7, wherein
   the second value is adjusted in accordance with the number of the data purchased and the number of reports on illegitimacy of the distributor.

9. A data transaction processing apparatus comprising:
   a transaction processing unit configured to:

   request a terminal of a purchaser of data to pay for the data and a deposit;
   transmit the data to the terminal of the purchaser in response to the payment for the data and the deposit; and
   refund an amount of money within the deposit to the terminal of the purchaser in response to a report on illegitimacy of a distributor of the data from the terminal of the purchaser.

10. The data transaction processing apparatus according to claim 9, wherein
    the transaction processing unit refunds the amount of money within the deposit to a terminal of another purchaser who has purchased the data in response to the report on illegitimacy of the distributor of the data from the terminal of the purchaser.

**11.** The data transaction processing apparatus according to claim 9, wherein
when the distributor of the data is legitimate, the transaction processing unit does not refund the amount of money within the deposit to the terminal of the purchaser.

**12.** The data transaction processing apparatus according to any one of claims 9 to 11, wherein
the transaction processing unit refunds an amount of money obtained by subtracting a price of other data provided by a legitimate second distributor among the plurality of distributors from a price of the data, and pays an amount of money according to the price of the other data to a terminal of the second distributor.

**13.** A data transaction processing method comprising: causing a computer to execute:

requesting a terminal of a purchaser of data to pay for the data and a deposit;
transmitting the data to the terminal of the purchaser in response to the payment for the data and the deposit; and
refunding an amount of money within the deposit to the terminal of the purchaser in response to a report on illegitimacy of a distributor of the data from the terminal of the purchaser.

**14.** The data transaction processing method according to claim 13, wherein the computer refunds the amount of money within the deposit to a terminal of another purchaser who has purchased the data in response to the report on illegitimacy of the distributor of the data from the terminal of the purchaser.

**15.** The data transaction processing method according to claim 13, wherein
in a process of refunding the amount of money within the deposit to the terminal of the purchaser, when the distributor of the data is legitimate, the amount of money within the deposit is not refunded to the terminal of the purchaser.

FIG. 1

ADMINISTRATOR

MARKETPLACE
SERVER    1

REPORT    DEPOSIT

3

2x
TERMINAL    PRICE+DEPOSIT →
            ← PURCHASE DATA
PURCHASER X

← EXHIBIT
  DATA
PROCEEDS →
TERMINAL    2a
SELLER A

2y
TERMINAL    PRICE+DEPOSIT →
            ← PURCHASE DATA
PURCHASER Y

NW

2z
TERMINAL    PRICE+DEPOSIT →
            ← PURCHASE DATA
PURCHASER Z

← EXHIBIT
  DATA
PROCEEDS →
TERMINAL    2b
SELLER B

PAYMENT SERVER    9

CPU 20    ROM 21    RAM 22

29

INPUT
DEVICE 25    DISPLAY
DEVICE 26    COMMUNICATION
PORT 24

# FIG. 2

CPU ⌇10

MARKET MANAGEMENT UNIT ⌇101

DEPOSIT SETTING UNIT ⌇102

USER IF UNIT ⌇103

ROM ⌇11

RAM ⌇12

COMMUNICATION PORT ⌇14

⌇19

HDD ⌇13

ACCOUNT MANAGEMENT TABLE ⌇130

DATA MANAGEMENT TABLE ⌇131

PURCHASE HISTORY MANAGEMENT TABLE ⌇132

ITEM DATABASE ⌇133

INPUT DEVICE ⌇15

DISPLAY DEVICE ⌇16

# FIG. 3

131

| DISTRIBUTOR | ITEM NAME | PRICE | DEPOSIT | LEGITIMACY |
|---|---|---|---|---|
| SELLER A | CONTENT XX | ¥150 | – | – |
| SELLER B | CONTENT XX | ¥50 | | – |

132

| PURCHASER | ITEM NAME | DISTRIBUTOR | AMOUNT OF PAYMENT | REPORT |
|---|---|---|---|---|
| X | CONTENT XX | SELLER B | ¥250 | ABSENT |
| Y | CONTENT XX | SELLER B | ¥250 | PRESENT |
| Z | CONTENT XX | SELLER A | ¥350 | ABSENT |

# FIG. 4

```
        ┌───────────┐
        │   START   │
        └───────────┘
              │
              ▼
┌─────────────────────────────┐
│      EXHIBITING PROCESS      │ ～ St1
└─────────────────────────────┘
              │
              ▼
┌─────────────────────────────┐
│    DEPOSIT SETTING PROCESS   │ ～ St2
└─────────────────────────────┘
              │
              ▼
┌─────────────────────────────┐
│         SALE PROCESS         │ ～ St3
└─────────────────────────────┘
              │
              ▼
┌─────────────────────────────┐
│      REVIEWING PROCESS       │ ～ St4
└─────────────────────────────┘
              │
              ▼
┌─────────────────────────────┐
│      SETTLING PROCESS        │ ～ St5
└─────────────────────────────┘
              │
              ▼
        ┌───────────┐
        │    END    │
        └───────────┘
```

# FIG. 5

| DISTRIBUTOR | ITEM NAME | PRICE | DEPOSIT | LEGITIMACY |
|---|---|---|---|---|
| SELLER A | CONTENT XX | ¥150 | – | – |
| SELLER B | CONTENT XX | ¥50 | | – |

# FIG. 6

| DISTRIBUTOR | ITEM NAME | PRICE | DEPOSIT | LEGITIMACY |
|---|---|---|---|---|
| SELLER A | CONTENT XX | ¥150 | ¥200 | – |
| SELLER B | CONTENT XX | ¥50 | | – |

# FIG. 7

```
                                    MARKETPLACE SERVER                              ┌─ 1
        PURCHASER      ┌─101        ┌─131          ┌─133           ┌─132
          X (Y)      ┌───────┐   ┌────────┐    ┌────────┐     ┌──────────┐
        ┌─ 2x(2y)    │MARKET │   │  DATA  │    │  ITEM  │     │ PURCHASE │
        ┌────────┐   │MANAGE-│   │MANAGE- │    │DATABASE│     │ HISTORY  │
        │TERMINAL│   │ MENT  │   │ MENT   │    │        │     │MANAGEMENT│
        └────────┘   │ UNIT  │   │ TABLE  │    │        │     │  TABLE   │
                     └───────┘   └────────┘    └────────┘     └──────────┘
```

ITEM SEARCH REQUEST (XX)

ITEM SEARCH (XX)

PAYMENT CALCULATION ── S11

ITEM INFORMATION (XX, DISTRIBUTOR, PAYMENT)

PURCHASE NOTIFICATION (XX,B)

PAYMENT REQUEST (¥250)

PAYMENT RESPONSE (¥250)

DATA (B,XX)

DATA (B,XX)

HISTORY INFORMATION (XX,B,¥250)

PURCHASER Z

TERMINAL ┌─ 2z

ITEM SEARCH REQUEST (XX)

ITEM SEARCH (XXX)

PAYMENT CALCULATION ── S12

ITEM INFORMATION (XX, DISTRIBUTOR, PAYMENT)

PURCHASE NOTIFICATION (XX,B)

PAYMENT REQUEST (¥350)

PAYMENT RESPONSE (¥350)

DATA (A,XX)

DATA (A,XX)

HISTORY INFORMATION (XX,A,¥350)

| PURCHASER | ITEM NAME | DISTRIBUTOR | AMOUNT OF PAYMENT | REPORT |
|-----------|-----------|-------------|-------------------|--------|
| X | CONTENT XX | SELLER B | ¥250 | – |
| Y | CONTENT XX | SELLER B | ¥250 | – |
| Z | CONTENT XX | SELLER A | ¥350 | – |

# FIG. 8

PURCHASER Y

MARKETPLACE SERVER ┌ 1

| TERMINAL 2y | MARKET MANAGEMENT UNIT ┌101 | USER IF UNIT ┌103 | DATA MANAGEMENT TABLE ┌131 | ITEM DATABASE ┌134 | PURCHASE HISTORY MANAGEMENT TABLE ┌132 |

VIOLATION REPORT (XX,B)

VIOLATION REPORT

ITEM INFORMATION

DATA (XX)

DATA CHECK

CHECK RESULT

PRESENCE OR ABSENCE OF REPORT (Y, PRESENT)

CERTAIN PERIOD ELAPSED

PRESENCE OR ABSENCE OF REPORT (X, ABSENT)

PRESENCE OR ABSENCE OF REPORT (Z, ABSENT)

| DISTRIBUTOR | ITEM NAME | PRICE | DEPOSIT | LEGITIMACY |
|---|---|---|---|---|
| SELLER A | CONTENT XX | ¥150 | ¥200 | OK |
| SELLER B | CONTENT XX | ¥50 | | NG |

| PURCHASER | ITEM NAME | DISTRIBUTOR | AMOUNT OF PAYMENT | REPORT |
|---|---|---|---|---|
| X | CONTENT XX | SELLER B | ¥250 | ABSENT |
| Y | CONTENT XX | SELLER B | ¥250 | PRESENT |
| Z | CONTENT XX | SELLER A | ¥350 | ABSENT |

# FIG. 9

FIG. 10

| SELLER A | SELLER B | MARKETPLACE SERVER $\overset{\Gamma^1}{}$ | | | |
|---|---|---|---|---|---|
| TERMINAL $\overset{\Gamma^{2a}}{}$ | TERMINAL $\overset{\Gamma^{2b}}{}$ | MARKET MANAGEMENT UNIT $\overset{\Gamma^{101}}{}$ | DATA MANAGEMENT TABLE $\overset{\Gamma^{131}}{}$ | ITEM DATABASE $\overset{\Gamma^{133}}{}$ | ACCOUNT MANAGEMENT TABLE $\overset{\Gamma^{130}}{}$ |

ITEM REGISTRATION REQUEST (XX,¥500)

PRICE SETTING REQUEST

PRICE NOTIFICATION (¥150)

ITEM REGISTRATION (XX,A)

ITEM STORAGE (XX,A)

DEPOSITED MONEY INFORMATION (A,¥500)

EXHIBITION COMPLETION NOTIFICATION

ITEM REGISTRATION REQUEST (XX,¥500)

PRICE SETTING REQUEST

PRICE NOTIFICATION (¥50)

ITEM REGISTRATION (XX,B)

ITEM STORAGE (XX,B)

DEPOSITED MONEY INFORMATION (B,¥500)

EXHIBITION COMPLETION NOTIFICATION

| DISTRIBUTOR | ITEM NAME | PRICE | DEPOSIT | LEGITIMACY |
|---|---|---|---|---|
| SELLER A | CONTENT XX | ¥150 | – | – |
| SELLER B | CONTENT XX | ¥50 | | – |

| DISTRIBUTOR | DEPOSITED MONEY |
|---|---|
| SELLER A | ¥500 |
| SELLER B | ¥500 |

# FIG. 11

```
                                    MARKETPLACE SERVER                          ┌1
                            ┌101        ┌131        ┌133          ┌132
PURCHASER              ┌─────────┐  ┌─────────┐  ┌─────────┐  ┌─────────┐
X (Y)                 │ MARKET  │  │  DATA   │  │         │  │PURCHASE │
┌2x(2y)               │MANAGEMENT│ │MANAGEMENT│ │  ITEM   │  │ HISTORY │
┌────────┐            │  UNIT   │  │  TABLE  │  │DATABASE │  │MANAGEMENT│
│TERMINAL│            └─────────┘  └─────────┘  └─────────┘  │  TABLE  │
└────────┘                                                   └─────────┘
```

ITEM SEARCH REQUEST (XX)

ITEM SEARCH (XX)

PAYMENT CALCULATION — S41

ITEM INFORMATION (XX, DISTRIBUTOR, PAYMENT)

PURCHASE NOTIFICATION (XX,B)

PAYMENT REQUEST (¥210)

PAYMENT RESPONSE (¥210)

DATA (B,XX)

DATA (B,XX)

HISTORY INFORMATION (XX,B,¥210)

PURCHASER Z

┌2z
TERMINAL

ITEM SEARCH REQUEST (XX)

ITEM SEARCH (XXX)

PAYMENT CALCULATION — S42

ITEM INFORMATION (XX, DISTRIBUTOR, PAYMENT)

PURCHASE NOTIFICATION (XX,B)

PAYMENT REQUEST (¥310)

PAYMENT RESPONSE (¥310)

DATA (A,XX)

DATA (A,XX)

HISTORY INFORMATION (XX,A,¥310)

| PURCHASER | ITEM NAME | DISTRIBUTOR | AMOUNT OF PAYMENT | REPORT |
|-----------|-----------|-------------|-------------------|--------|
| X | CONTENT XX | SELLER B | ¥210 | – |
| Y | CONTENT XX | SELLER B | ¥210 | – |
| Z | CONTENT XX | SELLER A | ¥310 | – |

# FIG. 12

# FIG. 13

START

$n=0, \beta n=100$ — St11

ACQUIRE PURCHASE QUANTITY, ILLEGITIMATE PURCHASE QUANTITY, AND VIOLATION REPORT QUANTITY — St12

UPDATE TIMING? — St13
NO

YES

PURCHASE QUANTITY HAS DECREASED? — St14
NO

YES

PURCHASE QUANTITY HAS INCREASED? — St18
NO

YES

$\beta n+1=(1-\delta)\beta n$ — St15

$\beta n+1=(\mu/\varepsilon)\beta n$ — St19

$\alpha=Pmax+Pmin+\beta n+1$ — St16

$n=n+1$ — St17

# FIG. 14

| DISTRIBUTOR | ITEM NAME | PRICE | DEPOSIT | LEGITIMACY |
|---|---|---|---|---|
| SELLER A | CONTENT XX | ¥150 | ¥200 | OK |
| SELLER B | CONTENT XX | ¥50 | | NG |

| PURCHASER | ITEM NAME | DISTRIBUTOR | AMOUNT OF PAYMENT | REPORT |
|---|---|---|---|---|
| X | CONTENT XX | SELLER B | ¥250 | ABSENT |
| Y | CONTENT XX | SELLER B | ¥250 | ABSENT |
| Z | CONTENT XX | SELLER A | ¥350 | PRESENT |

# FIG. 15

## FIG. 16

# FIG. 17

130

| ACCOUNT | REPORT POSSIBLE NUMBER |
|---|---|
| PURCHASER X | 0 |
| PURCHASER Y | 2 |
| PURCHASER Z | 3 |

# FIG. 18

132

| PURCHASER | ITEM NAME | DISTRIBUTOR | AMOUNT OF PAYMENT | REPORT |
|---|---|---|---|---|
| X | CONTENT XX | SELLER B | ¥250 | ABSENT |
| Y | CONTENT XX | SELLER B | ¥250 | PRESENT |
| Z | CONTENT XX | SELLER A | ¥350 | ABSENT |

Europäisches
Patentamt

European
Patent Office

Office européen
des brevets

# EUROPEAN SEARCH REPORT

Application Number

EP 19 21 1479

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/222661 A1 (MCCARTHY SCOTT [US] ET AL) 7 August 2014 (2014-08-07) * paragraph [0022] - paragraph [0061]; figures 1-6 * ----- | 1-15 | INV. G06Q20/12 G06Q20/02 |
| X | EP 2 120 198 A1 (NTT DOCOMO INC [JP]) 18 November 2009 (2009-11-18) * paragraph [0022] - paragraph [0120]; figures 1-8 * ----- | 1-15 | |

TECHNICAL FIELDS
SEARCHED     (IPC)

G06Q

The present search report has been drawn up for all claims

| Place of search | Date of completion of the search | Examiner |
|---|---|---|
| The Hague | 2 April 2020 | Raymaekers, Jens |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................
& : member of the same patent family, corresponding
    document

EPO FORM 1503 03.82 (P04C01)

# EP 3 667 587 A1

## ANNEX TO THE EUROPEAN SEARCH REPORT
## ON EUROPEAN PATENT APPLICATION NO.

EP 19 21 1479

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2020

| Patent document cited in search report | | | Publication date | Patent family member(s) | | | Publication date |
|---|---|---|---|---|---|---|---|
| US 2014222661 | A1 | | 07-08-2014 | CN | 104021032 | A | 03-09-2014 |
| | | | | US | 2014222661 | A1 | 07-08-2014 |
| | | | | WO | 2014123789 | A2 | 14-08-2014 |
| EP 2120198 | A1 | | 18-11-2009 | CN | 101601058 | A | 09-12-2009 |
| | | | | EP | 2120198 | A1 | 18-11-2009 |
| | | | | JP | 5073308 | B2 | 14-11-2012 |
| | | | | JP | 2008197747 | A | 28-08-2008 |
| | | | | US | 2011004555 | A1 | 06-01-2011 |
| | | | | US | 2013304652 | A1 | 14-11-2013 |
| | | | | WO | 2008096808 | A1 | 14-08-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004362355 A